# DEMANDE DE BREVET EUROPEEN

(11) **EP 1 865 696 A2**
(43) Date de publication de la demande: **12.12.2007**
(21) Numéro de dépôt: 07109707.5
(22) Date de dépôt: 06.06.2007
(51) Int. Cl.: H04M 3/487

(54) **Procédé de signalisation comprenant une opération de conversion d'un message en provenance d'un terminal appelant**

(30) Priorité: 07.06.2006 FR 0652036
(71) Demandeur: Alcatel Lucent, 75008 Paris (FR)
(72) Inventeur: Pierre, Sylvie, 67400, Illkirch-Graffenstaden (FR); Behr, Jean-Luc, 67100, Strasbourg (FR)
(74) Mandataire: Sciaux, Edmond

(57) **Abrégé**

Procédé de signalisation sur un terminal appelé (3) d'un appel en provenance d'un terminal appelant (2), ce procédé comprenant les opérations suivantes :
- mémorisation préalable, dans une base de données (5) de messages de données dans un premier format non restituable par le terminal appelé (3),
- lors la réception par un serveur (4) d'une requête de mise en communication, analyse de cette requête pour détecter si cette requête comprend ou non au moins un message de données dans un premier format non restituable par le terminal appelé (3),
- si la requête de mise en communication comprend un message de données dans un premier format non restituable par le terminal appelé (3), conversion par le serveur (4) du message de données dans un second format restituable par le terminal appelé (3),
- puis transmission du message converti au terminal appelé (3).

## Description

L'invention a trait au domaine des télécommunications. Plus précisément, elle concerne la mise en relation de deux terminaux, un terminal appelant et un terminal appelé, au moyen serveur formant relais de télécommunication.

Une communication téléphonique comprend classiquement trois phases :
- une première phase, dite d'établissement de la communication ou de signalisation, dans laquelle l'appel en provenance du terminal appelant est présenté au terminal appelé, généralement au moyen d'un avertissement sonore (tel qu'une sonnerie), visuel (tel que l'affichage d'un témoin lumineux) ou encore mécanique (tel qu'une vibration),
- une deuxième phase, dite de communication, dans laquelle, le terminal appelé ayant accepté l'appel, une session est établie entre les deux terminaux, lors de laquelle des informations (par exemple vocales) sont échangées entre eux, et
- une troisième et dernière phase, dite de terminaison, dans laquelle la communication entre les deux terminaux est coupée.
   Les terminaux communicants modernes : téléphones cellulaires, PDA (Personal Data Assistant), pagers, etc., comportent des mémoires dans lesquelles sont stockées un certain nombre d'informations, par exemple des informations personnelles relatives au propriétaire (nom, prénom, adresse, fonction, etc.). Ils comprennent également des interfaces leur permettant d'afficher, lors d'une présentation d'appel, des informations relatives au terminal appelant (numéro d'appel, nom et éventuellement photographie du correspondant, etc.). Grâce à ces fonctionnalités, les utilisateurs peuvent, dès la présentation de l'appel, choisir l'action qui leur paraît la plus appropriée : prise ou refus de l'appel, basculement vers un standard téléphonique ou une boîte vocale, mise en attente, etc.
   Si certains utilisateurs se contentent d'un minimum d'informations concertant le terminal appelant (tel que son numéro et le nom du propriétaire), d'autres constituent au sein de leur terminal des bases de données personnalisées plus complètes, incluant par exemple des photographies des appelants connus, une sonnerie différente affectée à chaque appelant connu selon son identité, etc. A titre d'illustration, on pourra se référer au brevet américain US 6 950 504.
   Ces habitudes, nées de la démocratisation de la téléphonie mobile, tendent à se généraliser à la téléphonie fixe, et en particulier à la téléphonie d'entreprise, notamment grâce à la constitution de réseaux utilisant le protocole IP (technologie couramment appelée VoIP ou Voix sur IP, de l'anglais *Voice over Internet Protocol).* De tels réseaux emploient des téléphones adaptés, appelés *téléphones IP,* qui numérisent la parole téléphonique et constituent des paquets IP, placés ensuite dans une trame et transmis sur le réseau (généralement suivant le protocole Ethernet).
   Suivant l'architecture du réseau, les terminaux peuvent soit communiquer directement (mode direct), soit indirectement (mode indirect), auquel cas les paquets sont transmis entre terminaux via des serveurs, tels que des serveurs mandataires *(proxy)* comprenant la combinaison d'une partie physique *(hardware)* et d'une partie logicielle *(software).*
   Le mode indirect est généralement préféré car il permet d'ajouter des services supplémentaires tels qu'un filtrage de paquets, une détection d'intrusion, ou encore un pare-feu.
   Il est à noter que, dans les réseaux VoIP, les phases de signalisation et de terminaison d'une part, et de communication d'autre part, sont réalisées suivant des protocoles distincts. Pour la signalisation et la terminaison, le protocole le plus répandu à l'heure actuelle est le protocole SIP *(Session Initiation Protocol)* décrit dans la norme RFC2543 de mars 1999.
   Dans l'idéal, une pleine exploitation des potentialités de la voix sur IP suppose l'installation de terminaux haut de gamme susceptibles de restituer l'ensemble des informations qui leur sont transmises lors de la phase de signalisation. De tels terminaux sont toutefois coûteux. C'est pourquoi la plupart des réseaux n'en comportent qu'un petit nombre, le reste de la flotte étant constitué de terminaux de moyenne gamme ou bas de gamme, aux fonctionnalités restreintes (par exemple sans écran). Cependant, ces terminaux n'ont la capacité de restituer qu'une partie, voire aucune, des informations qui leur sont transmises lors de la phase de signalisation.
- Afin de remédier notamment à ce problème, l'invention propose, en premier lieu, un procédé de signalisation sur un terminal appelé d'un appel en provenance d'un terminal appelant, ce procédé comprenant ce procédé comprenant :

- la réception par un serveur d'une requête de mise en communication en provenance du terminal appelant,
- et si cette requête comprend au moins un message de données dans un premier format non restituable par le terminal appelé, la conversion par le serveur du message de données dans un second format, restituable par le terminal appelé ;
- puis la transmission par le serveur du message converti au terminal appelé ;
   ce procédé étant caractérisé en ce qu'il comprend en outre les opérations suivantes :
- mémorisation préalable, dans une base de données de messages de données dans ledit premier format non restituable par le terminal appelé,
- et, lors la réception par un serveur d'une requête de mise en communication, analyse de cette requête pour détecter si cette requête comprend ou non au moins un message de données dans un premier format non restituable par le terminal appelé.

Il est ainsi possible de retransmettre, à un terminal appelé ne pouvant restituer un message transmis par un terminal appelant, les informations contenues dans ce message.

Le message reçu du terminal appelant est par exemple un message textuel : dans ce cas, le message converti est par exemple un message vocal, qui peut être restitué sur haut-parleur par le terminal appelé.

La requête en provenance du terminal appelant peut être une requête SIP, le message de données incluant au moins une ligne d'en-tête comprenant un en-tête prédéfini suivi d'une valeur d'en-tête.

L'en-tête n'étant pas restituable par le terminal appelé, la ligne d'en-tête (comprenant l'en-tête et la valeur d'en-tête), est par exemple convertie par le serveur en message vocal restituable par le terminal appelé.

L'invention propose, en second lieu, un serveur comprenant :
- des moyens pour recevoir une requête de mise en communication en provenance d'un terminal appelant à destination d'un terminal appelé,
- des moyens pour convertir un message de données contenu dans la requête, si ce message de données est dans un premier format non restituable par le terminal appelé, afin de convertir le message de données dans un second format restituable par le terminal appelé ;
- des moyens pour transmettre ensuite le message converti au terminal appelé ;
caractérisé en ce qu'il comprend en outre :
- des moyens pour mémoriser préalablement, dans une base de données des messages de données dans ledit premier format non restituable par le terminal appelé,
- et des moyens pour, lors la réception par un serveur d'une requête de mise en communication, analyser cette requête afin de détecter si cette requête comprend ou non au moins un message de données dans un premier format non restituable par le terminal appelé.
   L'invention propose, en troisième lieu, un réseau de télécommunication comprenant un serveur tel que décrit ci-dessus, ainsi qu'un terminal et une base de données reliés au serveur, cette base de donnée comprenant des messages de données dans ledit premier format non restituable par le terminal appelé.
- L'invention propose, en quatrième lieu, un produit programme d'ordinateur comprenant des instructions pour :
   - recevoir une requête de mise en communication en provenance d'un terminal appelant à destination d'un terminal appelé,
   - convertir un message de données contenu dans la requête, si ce message de données est dans un premier format non restituable par le terminal appelé, afin de convertir le message de données dans un second format restituable par le terminal appelé ;
   - transmettre ensuite le message converti au terminal appelé ;
   ce programme étant caractérisé en ce qu'il comprend en outre des instructions pour :
   - mémoriser préalablement, dans une base de données des messages de données dans ledit premier format non restituable par le terminal appelé
   - et, lors la réception par un serveur d'une requête de mise en communication, analyser cette requête afin de détecter si cette requête comprend ou non au moins un message de données dans un premier format non restituable par le terminal appelé.

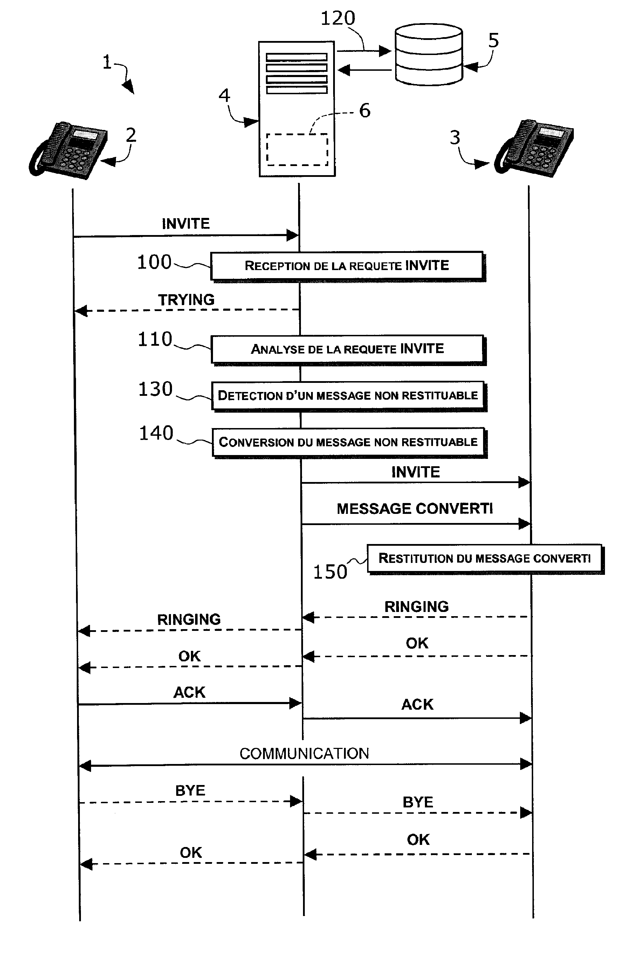

D'autres objets et avantages de l'invention apparaîtront à la lumière de la description faite ci-après en référence au dessin annexé qui est un schéma illustrant l'établissement, la tenue et la terminaison d'une communication entre deux terminaux au sein d'un réseau de télécommunications.

Sur ce dessin est représenté un réseau **1** de télécommunication de type VoIP, comprenant deux terminaux communicants **2, 3** sous forme de téléphones IP, et un serveur **4** mandataire (proxy) formant relais de télécommunication entre eux, lors d'une communication à établir entre un premier terminal **2**, dit terminal appelant (initiateur de l'appel), et le second terminal **3**, dit terminal appelé (destinataire de l'appel). Le serveur proxy **4** et le terminal appelé **3** peuvent faire partie d'un même réseau local LAN (Local Area Network). Le serveur proxy **4** est connecté à une base de données 5 où sont stockées les associations entre les adresses URI *(Uniform Resource Identifier)* et IP *(Internet Protocol)* du ou des terminaux **3** du réseau LAN.

Le réseau **1** est ici configuré pour utiliser le protocole SIP lors de l'établissement et la terminaison des communications. A cet effet, chaque terminal **2**, **3** comprend une application logicielle, dénommée UA (User Agent) implémentée sur son processeur et programmée pour générer des requêtes SIP. Les UA du terminal appelant **2** et du terminal appelé 3 sont respectivement dénommées UAC (User Agent Client) et UAS (User Agent Server).

Lorsque le terminal appelant **2** émet un appel à destination du terminal appelé **3,** l'UAC formule une requête SIP de demande d'établissement de communication (INVITE) sous forme d'une succession de lignes de texte, à savoir :
- une première ligne, appelée ligne de début, comprenant un message textuel incluant le terme INVITE suivi de l'adresse URI du terminal appelé, et
- une ou plusieurs lignes dites d'en-tête dans chacune desquelles figure un message textuel comprenant un en-tête prédéfini suivi d'une valeur.

Voici un exemple de requête SIP d'Invite. Le terminal appelé **3** est identifié par l'adresse URI *terminal_appelé@lan.com.* Les en-têtes sont le nom, le prénom de l'utilisateur principal du terminal appelant **2,** le numéro d'appel du terminal appelant **2** et la langue parlée par l'utilisateur principal :

| | |
|---|---|
| {ligne de début} | INVITE terminal_appelé@lan.com |
| {ligne d'en-tête} | NOM : DUPONT |
| {ligne d'en-tête} | PRENOM : MICHEL |
| {ligne d'en-tête} | NUMERO : +33123456789 |
| {ligne d'en-tête} | LANGUE : FR |

Par hypothèse, les fonctionnalités du terminal appelé **3** ne lui permettent pas de supporter tout ou partie des en-têtes émis par le terminal appelant **2,** ni par conséquent d'en restituer les valeurs respectives. Par exemple, le terminal appelé **3** peut supporter les en-têtes *NOM, PRENOM* et *NUMERO* et peut donc en restituer les valeurs, par exemple par affichage sur un écran, mais ne reconnaît pas l'en-tête *LANGUE,* dont il n'est pas capable de restituer la valeur (par exemple en l'affichant).

Afin de pallier cette déficience, les messages d'en-tête non supportés par le terminal appelé **3,** comprenant les en-têtes et leurs valeurs respectives, sont convertis par le serveur proxy **4** en messages restituables par le terminal appelé **3.** Le serveur **4** comprend à cet effet, par exemple sous forme d'une application logicielle **6** (programme d'ordinateur) implémentée sur processeur, des moyens (sous forme d'instructions du programme) pour analyser les messages d'en-tête et convertir les messages d'en-tête non supportés par le terminal appelé **3** en messages restituables. Cette application comprend par exemple un module de synthèse vocale *(Text to speech)* convertissant le texte en parole, laquelle peut être restituée sur haut-parleur par le terminal appelé **3.** Les en-têtes non supportés par le terminal appelé **3** sont préalablement mémorisés dans la base de données **5** (dans l'exemple ci-dessus, l'en-tête LANGUE est inscrit dans la base de données **5** comme non restituable par le terminal appelé **3**).

On décrit à présent les différentes phases d'une communication entre le terminal appelant **2** et le terminal appelé **3.**

Une requête SIP de demande de mise en communication (INVITE) est formulée par le terminal appelant **2.** Compte tenu de la racine *(@Ian)* de l'URI formulé par le terminal appelant **2,** la requête parvient (opération **100** de réception) au serveur proxy **4,** qui renvoie au terminal appelant **2** une réponse de tentative de connexion au terminal appelé **3** (TRYING).

La phase de signalisation, qui se déroule à l'instigation du serveur proxy **4,** comprend une première opération **110** d'analyse par celui-ci de la requête INVITE. Cette analyse débute par la lecture de la ligne de début, dans laquelle figure l'URI du terminal appelé **3.** Le serveur **4** effectue une opération **120** d'interrogation la base de données **5** pour en extraire l'adresse IP correspondant à cette URI, de sorte à identifier le terminal appelé **3.**

L'analyse de la requête par le serveur proxy **4** se poursuit par une opération **130** de lecture des lignes d'en-tête pour y détecter chaque en-tête non supporté par le terminal appelé **3** identifié, tel que mémorisé dans la base de données **5.** Dans l'exemple ci-dessus, le serveur **4** détecte l'en-tête LANGUE. Le serveur **4** effectue ensuite une opération **140** de conversion du message correspondant (incluant l'en-tête et sa valeur correspondante) en un message restituable par le terminal appelé **3.** Dans l'exemple ci-dessus, le serveur **4** convertit le message d'en-tête LANGUE : FR en un message vocal contenant les informations du message d'en-tête, par exemple une phrase du type : *« La langue parlée par le correspondant cherchant à vous joindre est le Français* ».

L'opération suivante consiste pour le serveur **4** à retransmettre au terminal appelé **3** la requête INVITE, comprenant les messages d'en-tête restituables par le terminal appelé **3,** et de préférence débarrassé des messages d'en-tête non restituables par celui-ci, pour éviter toute erreur de lecture par le terminal **3.** Le serveur **4** effectue, simultanément à ou après cette opération de retransmission, une opération **150** de transmission au terminal appelé **3** du ou de chaque message converti, lequel effectue une opération **160** de restitution par le terminal **3** à l'attention du destinataire de l'appel. Dans l'exemple ci-dessus, le terminal appelé **3** débite, par l'intermédiaire d'un haut-parleur, la phrase « *La langue parlée par le correspondant cherchant à vous joindre est le Français ».*

Le terminal appelé **3** renvoie au terminal appelant **2,** par l'intermédiaire du serveur **4,** un message de réponse SIP accusant réception de l'appel (RINGING). Dans l'hypothèse où le correspondant accepte l'appel, il décroche le combiné du terminal appelé **3,** lequel envoie au terminal appelant **2,** par l'intermédiaire du serveur **4,** un message de réponse SIP témoignant de l'acceptation de l'appel (OK). Le terminal appelant **2** accuse réception du message d'acceptation en transmettant au terminal appelé **3,** par l'intermédiaire du serveur **4,** une requête SIP de confirmation d'établissement de la communication (ACK), achevant ainsi la phase d'établissement de la communication (ou de signalisation).

La phase suivante, de communication, comprend l'échange d'informations entre les deux terminaux **2, 3.**

La phase suivante, de terminaison de la communication, comprend l'envoi par l'un des terminaux, par exemple par le terminal appelant **2** lors du raccrochage de son combiné, d'une requête SIP de terminaison (BYE) à l'autre terminal (terminal appelé **3)** par l'intermédiaire du serveur **4.** Le terminal appelé **3** renvoie au terminal appelant **2,** par l'intermédiaire du serveur **4,** un message SIP de réponse (OK) témoignant de l'acceptation de la terminaison de la communication, achevant ainsi la phase de terminaison.

Il est ainsi possible de faire restituer de manière indirecte un message sur un terminal dont les performances ne lui permettent pas de restituer ce message tel quel. En d'autres termes, le format du message initial n'étant pas restituable par le terminal appelé **3,** le message est converti dans un format restituable. Le terme « format » peut ici recouvrir plusieurs notions.

Le format peut se référer à la nature du message, par exemple textuelle ou vocale. Dans l'hypothèse par exemple où le terminal appelé **3** ne peut prendre en charge les messages textuels, par exemple parce qu'il est dépourvu d'écran, ceux-ci sont convertis en messages vocaux.

Le format peut également se référer à un type d'en-tête dans un message SIP (par exemple *LANGUE,* comme décrit ci-dessus). Dans ce cas, comme dans l'exemple décrit ci-dessus, le message textuel peut être converti en message vocal.

Un message pouvant être constitué par un fichier joint par le terminal appelant **2** lors d'une phase d'établissement de l'appel (par exemple sous forme d'une image), le format peut enfin se référer à l'extension du fichier. Dans ce cas, et dans l'hypothèse où le terminal appelé **3** ne supporte pas l'extension, le fichier est converti dans un format dont l'extension est supportée par le terminal appelé **3.** Par exemple, une image (telle que la photographie du propriétaire du terminal appelant **2)** présentant l'extension TIF (non supportée par le terminal appelé **3),** transmise par le terminal appelant **2,** est convertie par le serveur proxy **4** au format JPG, supporté par le terminal appelé **3.**

## Revendications

1. Procédé de signalisation sur un terminal appelé (3) d'un appel en provenance d'un terminal appelant (2), ce procédé comprenant :
- la réception par un serveur (4) d'une requête de mise en communication en provenance du terminal appelant (2),
- et si cette requête comprend au moins un message de données dans un premier format non restituable par le terminal appelé (3), la conversion par le serveur (4) du message de données dans un second format, restituable par le terminal appelé (3) ;
- puis la transmission par le serveur (4) du message converti au terminal appelé (3) ;
ce procédé étant **caractérisé en ce qu'**il comprend en outre les opérations suivantes :
- mémorisation préalable, dans une base de données (5) de messages de données dans ledit premier format non restituable par le terminal appelé (3),
- et, lors la réception par un serveur (4) d'une requête de mise en communication, analyse de cette requête pour détecter si cette requête comprend ou non au moins un message de données dans un premier format non restituable par le terminal appelé (3),

2. Procédé selon la revendication 1, dans lequel le message reçu du terminal appelant (2) est un message textuel, le message converti étant un message vocal.

3. Procédé selon l'une des revendications 1 à 2, dans lequel la requête en provenance du terminal appelant (2) est une requête SIP, le message de données incluant au moins une ligne d'en-tête comprenant un en-tête prédéfini suivi d'une valeur d'en-tête.

4. Serveur de télécommunication comprenant :
- des moyens pour recevoir une requête de mise en communication en provenance d'un terminal appelant (2) à destination d'un terminal appelé (3),
- des moyens (6) pour convertir un message de données contenu dans la requête, si ce message de données est dans un premier format non restituable par le terminal appelé (3), afin de convertir le message de données dans un second format restituable par le terminal appelé (3) ;
- des moyens pour transmettre ensuite le message converti au terminal appelé (3) ;
**caractérisé en ce qu'**il comprend en outre :
- des moyens (6) pour mémoriser préalablement, dans une base de données (5) des messages de données dans ledit premier format non restituable par le terminal appelé (3),
- et des moyens (6) pour, lors la réception par un serveur (4) d'une requête de mise en communication, analyser cette requête afin de détecter si cette requête comprend ou non au moins un message de données dans un premier format non restituable par le terminal appelé (3),

5. Réseau (1) de télécommunication comprenant un serveur (4) selon la revendication 4, ainsi qu'au moins un terminal (3), et une base de données (5) reliés au serveur (4), **caractérisé en ce que** la base de donnée (5) contient des messages de données dans un premier format non restituable par ledit terminal (3).

6. Produit programme d'ordinateur comprenant des instructions pour :
- recevoir une requête de mise en communication en provenance d'un terminal appelant (2) à destination d'un terminal appelé (3),
- convertir un message de données contenu dans la requête, si ce message de données est dans un premier format non restituable par le terminal appelé (3), afin de convertir le message de données dans un second format restituable par le terminal appelé (3) ;
- transmettre ensuite le message converti au terminal appelé (3) ; ce programme étant **caractérisé en ce qu'**il comprend en outre des instructions pour :
- mémoriser préalablement, dans une base de données (5) des messages de données dans ledit premier format non restituable par le terminal appelé (3),
- et, lors la réception par un serveur (4) d'une requête de mise en communication, analyser cette requête afin de détecter si cette requête comprend ou non au moins un message de données dans un premier format non restituable par le terminal appelé (3),

7. Produit programme d'ordinateur selon la revendication 6, qui comprend un module de synthèse vocale.
